# EUROPÄISCHE PATENTSCHRIFT

(11) **EP 4 563 816 B1**
(45) Veröffentlichungstag und Bekanntmachung des Hinweises auf die Patenterteilung: **16.09.2026**
(21) Anmeldenummer: 23212682.1
(22) Anmeldetag: 28.11.2023
(51) Int. Cl.: F03D 80/50, F03D 13/20

(54) **VERFAHREN ZUM WARTEN EINES WINDENERGIEANLAGEN-TURMS**
METHOD FOR MAINTAINING A WIND TURBINE TOWER
PROCÉDÉ D'ENTRETIEN D'UNE TOUR D'ÉOLIENNE

(43) Veröffentlichungstag der Anmeldung: 04.06.2025
(73) Patentinhaber: Wobben Properties GmbH, 26607 Aurich (DE)
(72) Erfinder: Kurlvink, Markus, 26810 Westoverledingen (DE)
(74) Vertreter: Eisenführ Speiser

(56) Entgegenhaltungen:
- WO-A1-2019/201641
- US-A1- 2019 194 884

## Beschreibung

Die vorliegende Erfindung betrifft ein Verfahren zum Warten eines Windenergieanlagen-Turms.

Türme einer Windenergieanlage bestehen typischerweise aus mehreren Segmenten, welche aufeinander platziert werden. Diese Segmente können miteinander beispielsweise mittels Spannlitzen verspannt werden.

WO 2019/201641 A1 beschreibt ein Verfahren zum Errichten eines Turms einer Windenergieanlage. Der Turm weist eine Mehrzahl von Turmsegmenten auf, welche mittels Spanngliedern miteinander verspannt werden. Eine Befestigungseinheit wird an einem Ende der Spannglieder befestigt. Hierzu wird eine Hülse auf einem Ende der Spannglieder befestigt. Anschließend kann das Spannglied nach oben, d. h. zum oberen Ende des Turms, gezogen und dort befestigt werden. Die Spannglieder verlaufen hierbei im Inneren des Turms aber nicht im Inneren der Turmwandung. Weiterer Stand der Technik ist in US2019194884 A1 offenbart.

Die Verspannung des Turms mittels der Spannglieder muss in regelmäßigen zeitlichen Abständen gewartet werden.

Es ist eine Aufgabe der vorliegenden Erfindung, ein Verfahren zum Warten eines Windenergieanlagen-Turms vorzusehen, welcher aus mehreren Turmsegmenten besteht und mittels Spanngliedern verspannt ist.

Diese Aufgabe wird durch ein Verfahren zum Warten eines Windenergieanlagen-Turms nach Anspruch 1 gelöst.

Spannglieder, z. B. Spannlitzen, können in einer Hülle vorgesehen sein, in welcher ebenfalls ein erstes Korrosionsschutzmittel, z. B. dünnflüssiges Öl, vorgesehen ist. Bei der Wartung einer Windenergieanlage wurde festgestellt, dass das Öl im Laufe der Zeit dünnflüssiger wird und dabei auslaufen kann. Aufgrund der Schwerkraft kann das dünnflüssig gewordene Öl insbesondere im unteren Bereich der Spannlitzen auslaufen. Im unteren Bereich der Spannlitzen kann eine Hülse in Form eines Aufweitungsrohres vorgesehen sein, welche mit einem zweiten Korrosionsschutzmittel, z. B. Gel, gefüllt sein kann, welches ebenfalls als Korrosionsschutz dient. Hierbei kann es dazu kommen, dass das dünnflüssige Öl dann aus der Hülse ausläuft. Dies kann zu einer Verschmutzung im unteren Bereich der Windenergieanlage führen. Im schlimmsten Fall kann dies zu einer Kontaminierung des Bodenbereichs bzw. der Erde im Bereich des Fundaments der Windenergieanlage führen. Daher ist diese potentielle Verunreinigung zu vermeiden bzw. bei einer Wartung zu entsorgen.

Die Hülse bzw. das Aufweitungsrohr im unteren Bereich der Spannlitzen kann eine Pressdichtung aufweisen.

Zum Entsorgen des dünnflüssigen Öls im Bereich der Pressdichtung und des Aufweitungsrohres kann erfindungsgemäß ein Loch in die Hülse gebohrt werden, um das dünnflüssig gewordene Öl sicher mittels eines Schlauches über das Loch absaugen zu können. Anschließend kann das Loch wieder beispielsweise mit einem Gewebeband verschlossen werden. Alternativ zum Gewebeband kann auch ein Bitumenband verwendet werden. Wichtig ist hierbei, dass die Bohrung in der Hülse der Spannlitzen sicher verschlossen werden kann.

Gemäß einem weiteren Aspekt der vorliegenden Erfindung kann ein verschließbarer Hahn im Bereich der Bohrung in der Hülse vorgesehen sein, so dass das überschüssige dünnflüssige Öl über den Hahn auf einfache Art und Weise während der Wartung entsorgt werden kann.

Gemäß einem Aspekt der vorliegenden Erfindung kann ein Füllstandssensor im Bereich der Hülse vorgesehen sein. Ferner kann eine Bohrung in der Hülse vorgesehen sein. Ferner kann ein verschließbarer Hahn in der Bohrung vorgesehen sein.

Gemäß einem Aspekt der vorliegenden Erfindung kann anhand des Füllstandsensors erfasst werden, ob der Füllstand des dünnflüssigen Öls so hoch ist, dass das Öl zu entfernen ist. Hierzu kann ein Regler vorgesehen sein, welcher den Hahn bei Bedarf öffnet. Ferner kann optional eine Pumpe vorgesehen sein, um das dünnflüssige Öl abpumpen zu können. Damit kann ein automatisches Abpumpen erreicht werden.

Der Spannanker kann eine Hülse aufweisen, in welcher ein Unigel als Korrosionsschutz vorgesehen ist. Ein dünnflüssiges Öl kann innerhalb der Spannlitzen bzw. der Hülle der Spannlitzen als Korrosionsschutz vorgesehen sein.

Alternativ zu einem Füllstandssensor kann auch ein Ölsensor vorgesehen sein, um eine Fehlermeldung ausgeben zu können und eine Wartung initiieren zu können.

Gemäß einem Aspekt der vorliegenden Erfindung ist der Windenergieanlagen-Turm zumindest teilweise ein Betonturm, welcher aus einer Mehrzahl von Betonsegmenten besteht, die aufeinander platziert sind und mittels der Spannglieder verspannt sind.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage,
- Fig. 2: zeigt eine schematische Schnittansicht eines Turms einer Windenergieanlage,
- Fig. 3: zeigt eine perspektivische Ansicht von Spanngliedern im unteren Bereich eines Turms einer Windenergieanlage,
- Fig. 4: zeigt eine schematische und perspektivische Darstellung einer Befestigung von Spanngliedern,
- Fig. 5: zeigt eine perspektivische Darstellung eines Aufweitungsrohres für eine Befestigung von Spanngliedern,
- Fig. 6A: zeigt eine perspektivische Darstellung eines Aufweitungsrohres bei einer Bearbeitung des Aufweitungsrohres,
- Fig. 6B: zeigt einen schematischen Querschnitt eines Aufweitungsrohres während der Wartung der Windenergieanlage,
- Fig. 7: zeigt eine schematische Darstellung eines Aufweitungsrohres nach einer Bearbeitung des Aufweitungsrohres, und
- Fig. 8: zeigt eine schematische Schnittansicht eines Aufweitungsrohres.

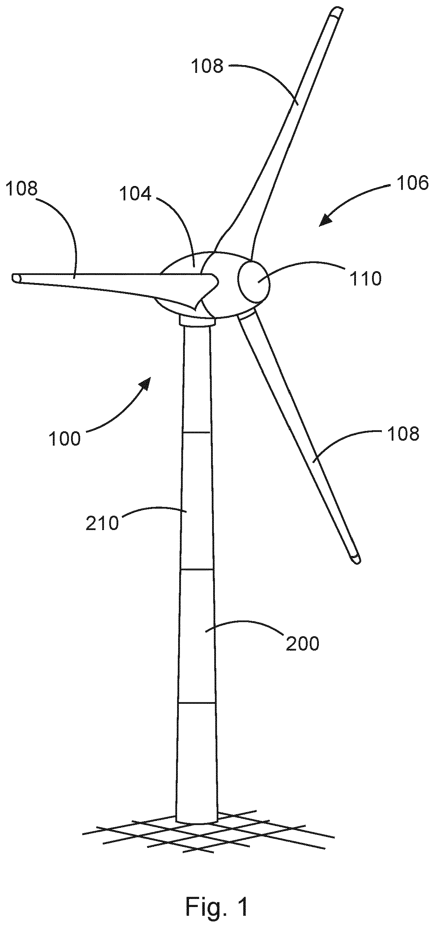

Fig. 1 zeigt eine schematische Darstellung einer Windenergieanlage. Die Windenergieanlage 100 weist einen Turm 200 bestehend aus einer Mehrzahl von Turmsegmenten auf. Auf dem Turm ist eine Gondel 104 und ein aerodynamischer Rotor 106 mit einem Spinner 110 und drei Rotorblättern 108 dargestellt. Der aerodynamische Rotor 106 ist mit einem Rotor eines (nicht gezeigten) elektrischen Generators verbunden, so dass beim Drehen des aerodynamischen Rotors 106 der elektrische Generator Energie erzeugt. Die Turmsegmente 210 des Turms 200 stellen vorzugsweise Betonfertigteile dar. Alternativ dazu können einige der Turmsegmente 210 auch Stahlsegmente darstellen.

Die Turmsegmente 210 des Turms 200 werden mittels Spanngliedern mit bzw. gegeneinander vorgespannt, um dem Turm 200 die nötige Festigkeit zu verleihen.

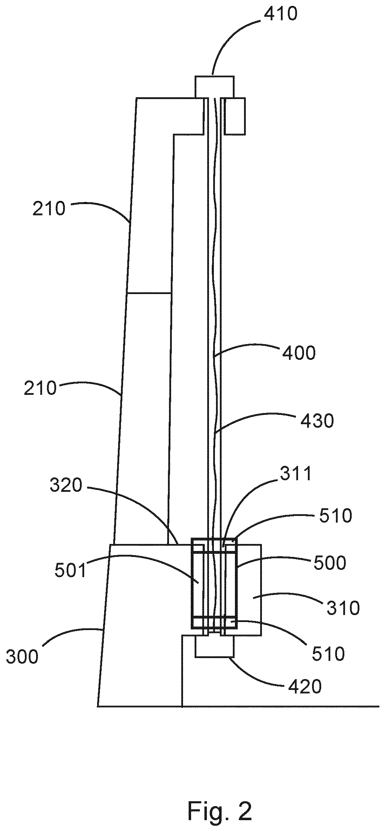

Fig. 2 zeigt eine schematische Schnittansicht eines Turms einer Windenergieanlage. In Fig. 2 ist insbesondere der Übergang zwischen einem Fundament 300 und einem unteren Bereich des Turms 200 mit einem Turmsegment 210 dargestellt. Das Fundament 300 kann einen Anguss 310 mit einer Mehrzahl von Durchgangsbohrungen 311 aufweisen. Alternativ dazu kann das Fundament 300 einen Fundamentkeller aufweisen. Spannglieder 400 zum Verspannen des Turms werden durch die Durchgangsbohrungen 310 geführt und am oberen Ende des Turms oder einiger Segmente beispielsweise mittels eines Spannankers 410 befestigt. Am unteren Ende kann ebenfalls ein Spannanker 420 vorgesehen sein. Die Spannglieder 400 können jeweils eine Mehrzahl von Spannlitzen 430 aufweisen, welche zu einem Spannglied zusammengefasst sind. Im Bereich der Durchgangsbohrungen 311 kann ein Aufweitungsrohr 500 zur Aufweitung der Spannglieder 400 vorgesehen sein. Am oberen und/oder unteren Ende 503, 504 des Aufweitungsrohres 500 kann eine Pressdichtung 510 vorgesehen sein, um das Innere des Aufweitungsrohres 500 abzudichten. Als Korrosionsschutz 501 kann im Bereich des Aufweitungsrohres 500 ein Unigel vorgesehen sein. Die Spannglieder 400 können mehrere Spannlitzen 430 aufweisen. Die Spannlitzen 430 können jeweils in einer Umhüllung 431 vorgesehen sein. In der Umhüllung 431 kann ein weiteres Korrosionsschutzmittel 432, beispielsweise ein Korrosionsschutzöl, vorgesehen sein.

Bei der routinemäßigen Wartung der Windenergieanlage wurden im Bereich der Aufweitungsrohre Verunreinigungen festgestellt. Als Ursache für die Verunreinigungen wurde zunächst der Korrosionsschutz (Unigel) in dem Aufweitungsrohr angesehen. Nach weiteren detaillierten Untersuchungen wurde jedoch festgestellt, dass die Verschmutzungen nicht von dem Korrosionsschutzmittel in dem Aufweitungsrohr 500 stammen, sondern dass die Verschmutzungen von dem Korrosionsschutzmittel 432 in der Umhüllung 431 der Spannlitzen 430 stammen. Der dort verwendete Korrosionsschutz (Öl) kann sich im Laufe der Zeit in seiner Viskosität verändern, so dass dünnflüssiges Öl in der Ummantelung 431 nach unten verlaufen kann und dann in dem Aufweitungsrohr gestaut wird. Wenn zu viel von dem dünnflüssigen Korrosionsschutzöl in das Aufweitungsrohr 500 fließt, dann kann dieses Öl über den oberen Rand des Aufweitungsrohres 500 austreten und den darum liegenden Bereich der Windenergieanlage verschmutzen.

Um eine derartige Verschmutzung zu vermeiden, kann ein Loch oder eine Öffnung in das Aufweitungsrohr gebohrt und das sich darin befindliche dünnflüssige Korrosionsschutzöl kann beispielsweise mittels eines Schlauchs entfernt werden. Anschließend kann das gebohrte Loch dann (mit einem Gewebeband oder einem Bitumenband) wieder verschlossen werden, so dass weder Unigel noch Korrosionsschutzöl austreten kann.

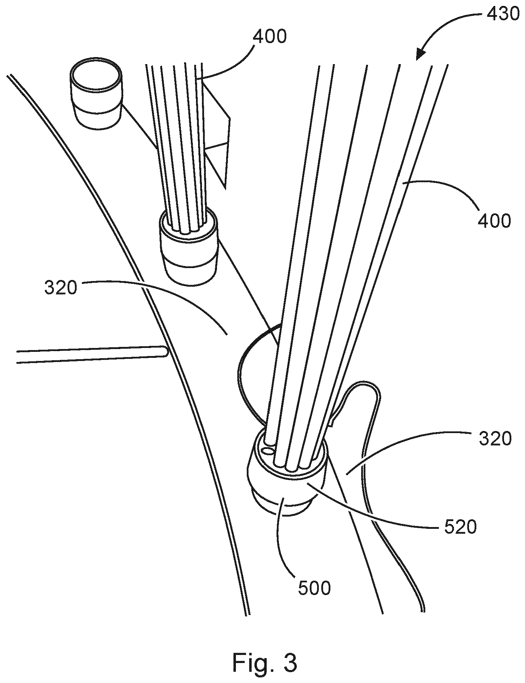

Fig. 3 zeigt eine perspektivische Ansicht von Spanngliedern im unteren Bereich eines Turms einer Windenergieanlage. In Fig. 3 sind mehrere Spannglieder 400 gezeigt, welche jeweils in einem Aufweitungsrohr 500 am unteren Ende enden. Die Aufweitungsrohre 500 sind in dem unteren Bereich 320 bzw. am oberen Ende 320 des Fundaments vorgesehen.

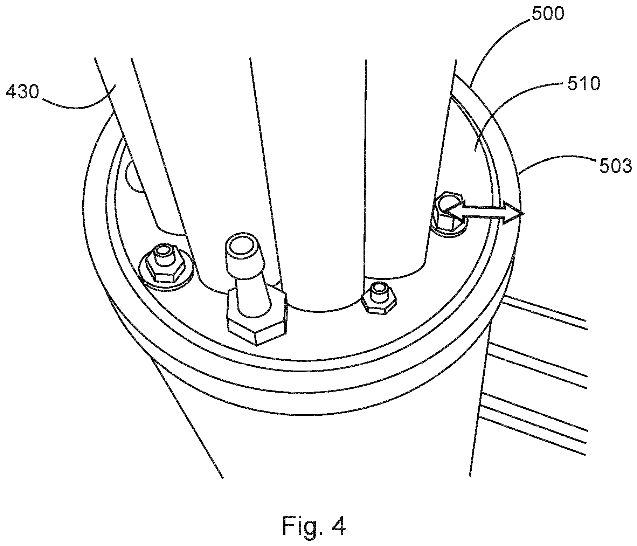

Fig. 4 zeigt eine schematische und perspektivische Darstellung einer Befestigung von Spanngliedern. In Fig. 4 ist eine detailliertere Ansicht des Aufweitungsrohres 500 mit einer Mehrzahl von Umhüllungen 430, die in dem Aufweitungsrohr 500 enden, gezeigt. Am oberen Ende 503 des Aufweitungsrohres ist eine Pressdichtung 510 vorgesehen.

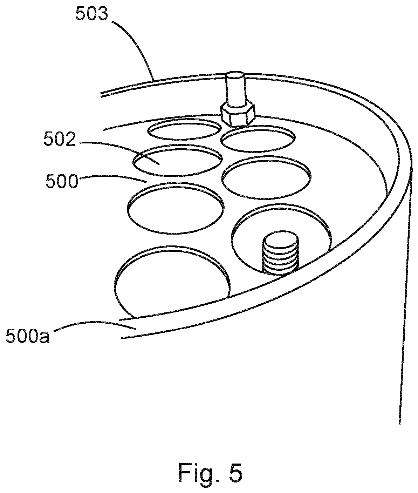

Fig. 5 zeigt eine perspektivische Darstellung eines Aufweitungsrohres für eine Befestigung von Spanngliedern. In Fig. 5 ist die Pressdichtung entfernt worden, so dass das Aufweitungsrohr 500 mit einer Wandung 500a und einer Mehrzahl von Durchgangsbohrungen 502 gezeigt ist, in welche jeweils eine Spannlitze mit einer Umhüllung 431 platziert werden kann.

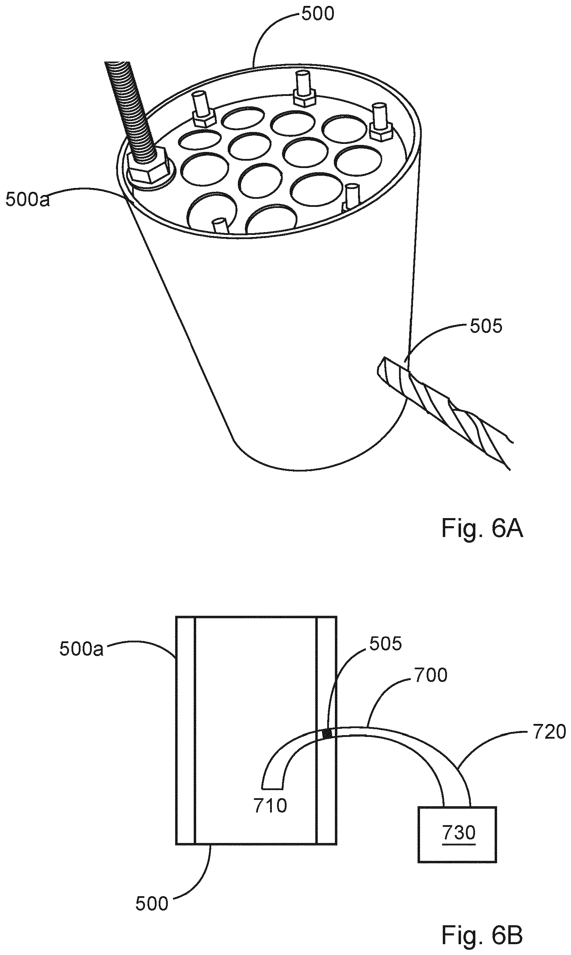

Fig. 6A zeigt eine perspektivische Darstellung eines Aufweitungsrohres bei einer Bearbeitung des Aufweitungsrohres. In Fig. 6 wird ein Loch oder eine Bohrung 505 in die Wandung 500a des Aufweitungsrohres 500 gebohrt, damit ein Schlauch an dieses Loch oder dieses Bohrung 505 angeschlossen werden kann, um überschüssiges Korrosionsschutzmaterial zu entfernen.

Fig. 6B zeigt einen schematischen Querschnitt eines Aufweitungsrohres während der Wartung der Windenergieanlage. Das Aufweitungsrohr 500 weist eine Wandung 500a mit einer Bohrung 505 auf, durch welche ein erstes Ende 710 eines Schlauches 700 in das Innere des Aufweitungsrohres 500 eingeführt werden kann. Das zweite Ende des Schlauches 720 kann in einem Auffangbehälter 730 platziert sein. Optional kann eine Pumpe vorgesehen sein, welche zum Abpumpen des sich innerhalb des Aufweitungsrohres 500 befindlichen überschüssigen Korrosionsschutzmaterials verwendet werden kann.

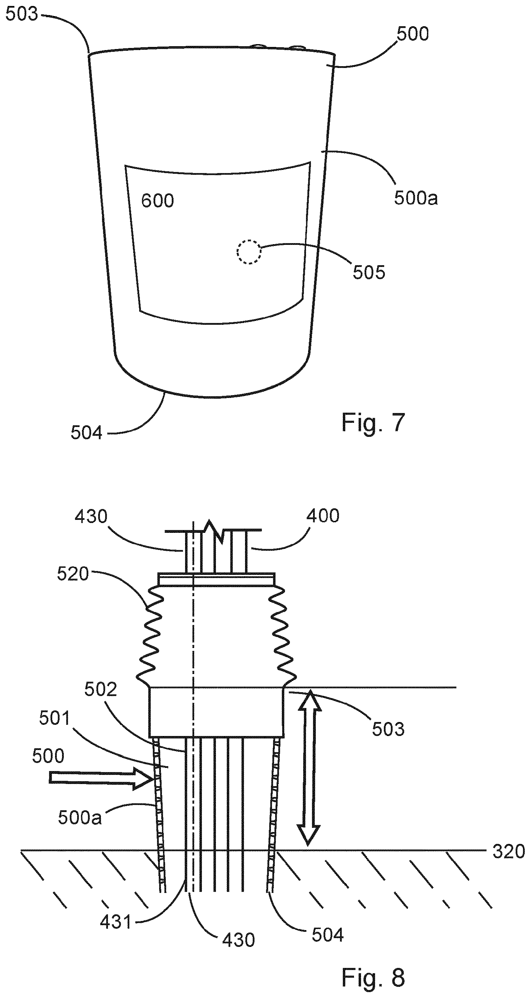

Fig. 7 zeigt eine schematische Darstellung eines Aufweitungsrohres nach einer Bearbeitung des Aufweitungsrohres. In Fig. 7 ist ein Gewebeband oder ein Bitumenband 600 auf der Wandung 500a des Aufweitungsrohres 500 derart platziert, dass das Bohrloch 505 verschlossen ist.

Fig. 8 zeigt eine schematische Schnittansicht eines Aufweitungsrohres. In Fig. 8 ist ein Aufweitungsrohr 500 mit einer Wandung 500a, einem oberen Ende 503, einem unteren Ende 504 sowie einer Mehrzahl von Durchgangsbohrungen 502 vorgesehen. In den Durchgangsbohrungen 502 können die Spannlitzen 430 mit dem Korrosionsschutzmittel 431 platziert sein. Im Inneren des Aufweitungsrohres kann ein weiteres Korrosionsschutzmittel 501 vorgesehen sein.

### Bezugszeichenliste

- 100: Windenergieanlage
- 104: Gondel
- 106: Rotor
- 108: Rotorblätter
- 110: Spinner
- 200: Turm
- 210: Turmsegmente
- 300: Fundament
- 310: Anguss
- 311: Durchgangsbohrungen
- 320: unterer Bereich
- 400: Spannglieder
- 420: Spannanker
- 430: Spannlitzen
- 431: Umhüllung
- 432: Spannglied-Korrosionsschutzmittel
- 500: Aufweitungsrohr
- 500a: Wandung
- 501: Aufweitungsrohr-Korrosionsschutzmittel
- 502: Durchgangsbohrungen
- 503: oberes Ende
- 504: unteres Ende
- 505: Bohrung
- 510: Pressdichtung
- 600: Band
- 700: Schlauch
- 710: 1. Ende
- 720: 2. Ende
- 730: Auffangbehälter

## Patentansprüche

1. Verfahren zum Warten eines Windenergieanlagen-Turms (200), welcher eine Mehrzahl von Turmsegmenten (210) aufweist, welche zumindest teilweise mittels Spanngliedern (400) außerhalb einer Wandung der Turmsegmente (210) verspannt sind, wobei zumindest einige der Turmsegmente (210) Betonfertigteilsegmente sind,
wobei ein erstes Ende der Spannglieder (400) in einem unteren Bereich (320) des Turms (200) der Windenergieanlage (100) derart verspannt sind, dass die Spannglieder (400) sich innerhalb eines Aufweitungsrohres (500) befinden, welches zumindest an seiner Oberseite mittels einer Pressdichtung abgedichtet ist, wobei ein erstes Korrosionsschutzmittel (432) sich innerhalb der Spannglieder (400) befindet,
wobei ein zweites Korrosionsschutzmittel (501) sich innerhalb des Aufweitungsrohres (500) befindet,
wobei zur Entfernung von überschüssigem Korrosionsschutzmaterial folgende Schritte durchgeführt werden:
Bohren einer Bohrung (505) in einer Wandung (500a) des Aufweitungsrohres (500),
Einführen eines Schlauchs (700) durch die Bohrung (500a) in das Innere des Aufweitungsrohres (500),
Abpumpen des sich in dem Aufweitungsrohr (500) befindlichen überschüssigen Korrosionsschutzmittels,
Entfernen des Schlauchs (700) aus der Bohrung (505), und
Verschließen der Bohrung (505).

2. Verfahren nach Anspruch 1, wobei
die Bohrung (505) mit einem flexiblen und klebfähigen Band (600) verschlossen wird.

3. Verfahren nach Anspruch 1 oder 2, wobei ein zu öffnendes Ventil im Bereich der Bohrung (505) vorgesehen ist, um die Bohrung (505) verschließen oder öffnen zu können.

4. Verfahren nach Anspruch 1, 2 oder 3, wobei
ein Füllstandssensor oder ein Ölsensor derart in oder an dem Aufweitungsrohr (500) platziert ist, dass er dazu geeignet ist, einen Füllstand oder das Vorhandensein von Öl in dem Aufweitungsrohr (500) zu erfassen und eine Meldung auszugeben, wenn ein vorbestimmter Füllstand erreicht ist.

5. Verfahren nach einem der Ansprüche 1 bis 4, wobei eine Pumpe vorgesehen ist, welche mit dem Schlauch gekoppelt ist, um überschüssiges Korrosionsschutzmaterial aus dem Aufweitungsrohr abzupumpen.

6. Verfahren nach einem der Ansprüche 1 bis 5, wobei
mittels des Schlauches (700) das erste Korrosionsschutzmittel (432) aus dem Aufweitungsrohres (500) abgesaugt wird.

## Claims

1. Method for maintaining a wind turbine tower (200), which has a plurality of tower segments (210), which are at least partially tensioned by means of tensioning members (400) outside a wall of the tower segments (210), wherein at least some of the tower segments (210) are precast concrete segments,
wherein a first end of the tensioning members (400) is tensioned in a lower region (320) of the tower (200) of the wind turbine (100) such that the tensioning members (400) are located inside an expansion tube (500), which is sealed at least at its upper side by means of a compression seal, wherein a first corrosion protection agent (432) is located inside the tensioning members (400),
wherein a second corrosion protection agent (501) is located inside the expansion tube (500),
wherein the following steps are performed for removing excess corrosion protection material:
drilling a bore (505) in a wall (500a) of the expansion tube (500),
introducing a hose (700) through the bore (500a) into the interior of the expansion tube (500),
pumping off the excess corrosion protection agent located in the expansion tube (500),
removing the hose (700) from the bore (505), and
closing the bore (505).

2. Method according to claim 1, wherein
the bore (505) is closed with a flexible and adhesive tape (600).

3. Method according to claim 1 or 2, wherein a valve to be opened is provided in the region of the bore (505), in order to be able to close or open the bore (505).

4. Method according to claim 1, 2 or 3, wherein
a level sensor or an oil sensor is placed in or on the expansion tube (500) such that it is suitable for detecting a fill level or the presence of oil in the expansion tube (500) and for issuing a message when a predetermined fill level is reached.

5. Method according to any one of claims 1 to 4, wherein a pump is provided which is coupled to the hose in order to pump off excess corrosion protection material from the expansion tube.

6. Method according to any one of claims 1 to 5, wherein
the first corrosion protection agent (432) is suctioned off from the expansion tube (500) by means of the hose (700).

## Revendications

1. Procédé d'entretien d'une tour d'éolienne (200), laquelle présente une pluralité de segments de tour (210) qui sont au moins partiellement mis en tension au moyen d'éléments de précontrainte (400) à l'extérieur d'une paroi des segments de tour (210), dans lequel au moins certains des segments de tour (210) sont des segments d'éléments préfabriqués en béton,
dans lequel une première extrémité des éléments de précontrainte (400) est mise en tension dans une zone inférieure (320) de la tour (200) de l'éolienne (100), de sorte que les éléments de précontrainte (400) se trouvent à l'intérieur d'un tube d'élargissement (500) qui est rendu étanche au moins sur sa face supérieure au moyen d'un joint d'étanchéité à compression, dans lequel un premier agent anticorrosion (432) se trouve à l'intérieur des éléments de précontrainte (400),
dans lequel un second agent anticorrosion (501) se trouve à l'intérieur du tube d'élargissement (500),
dans lequel les étapes suivantes sont effectuées pour éliminer l'excédent de matériau anticorrosion :
le perçage d'un alésage (505) dans une paroi (500a) du tube d'élargissement (500),
l'introduction d'un tuyau (700) à travers l'alésage (500a) à l'intérieur du tube d'élargissement (500),
le pompage de l'excédent d'agent anticorrosion se trouvant dans le tube d'élargissement (500),
le retrait du tuyau (700) de l'alésage (505), et
l'obturation de l'alésage (505).

2. Procédé selon la revendication 1, dans lequel
l'alésage (505) est obturé avec une bande (600) flexible et adhésive.

3. Procédé selon la revendication 1 ou 2, dans lequel une vanne à ouvrir est prévue dans la zone de l'alésage (505) pour pouvoir fermer ou ouvrir l'alésage (505).

4. Procédé selon la revendication 1, 2 ou 3, dans lequel
un capteur de niveau ou un capteur d'huile est placé dans ou sur le tube d'élargissement (500) de sorte qu'il soit adapté pour détecter un niveau ou la présence d'huile dans le tube d'élargissement (500) et délivrer un message lorsqu'un niveau prédéterminé est atteint.

5. Procédé selon l'une quelconque des revendications 1 à 4, dans lequel une pompe est prévue, qui est couplée au tuyau pour pomper un excédent de matériau anticorrosion hors du tube d'élargissement.

6. Procédé selon l'une quelconque des revendications 1 à 5, dans lequel
le premier agent anticorrosion (432) est aspiré du tube d'élargissement (500) au moyen du tuyau (700).
